# EUROPEAN PATENT APPLICATION

(11) **EP 1 772 641 A1**
(43) Date of publication of application: **11.04.2007**
(21) Application number: 06076776.1
(22) Date of filing: 26.09.2006
(51) Int. Cl.: F16D 11/14, B23P 15/14

(54) **Coupling and method for manufacturing the same**

(30) Priority: 04.10.2005 BE 200500482
(71) Applicant: HANSEN TRANSMISSIONS INTERNATIONAL NV, 2650 Edegem (BE)
(72) Inventor: Leimann Dirk, Olaf, 2650 Edegem (BE)
(74) Representative: Donné, Eddy

(57) **Abstract**

Method for manufacturing a coupling (1) of the type which mainly consists of a male part (2) and a female part (4), which are respectively provided with an axially extending outer toothing (3) and a complementary inner toothing (5), whereby both parts (2,4) can be axially shifted in relation to each other with their toothings (3,5), characterized in that it at least consists in making the toothing (5) of one of the parts (4) cylindrical and in realizing the grooves (8) between the outer toothings (3) of the male part (2) with a tool with which a female cylindrical shape (8) can be made, such as for example a drill or a cutter.

## Description

The present invention concerns a method for manufacturing a coupling.

In particular, the present invention concerns a method for manufacturing a coupling of the type which mainly consists of a male and a female part, respectively provided with an axially extending outer and inner toothing, whereby both parts can axially shift in relation to each other with their toothings.

Couplings of the above-mentioned type are used to couple two rotating parts, a driving and a driven part respectively.

The toothing which is applied to said couplings is usually difficult to manufacture.

With the known methods for manufacturing the couplings, use is made of special toothing machines for milling and cutting the toothing, both the inner toothing and the outer toothing, which have to be specially designed or adjusted to that end.

A disadvantage of this known method is of course the high cost entailed by the production or acquisition of the special toothing machines, as well as the high cost of the skilled personnel who is able to work with such machines.

The present invention aims to remedy one or several of the above-mentioned and other disadvantages, whereby a method is aimed which makes it possible to manufacture the toothing of the coupling in a simple manner, without compromising the quality of the coupling.

To this end, the present invention concerns a method for manufacturing a coupling of the type which mainly consists of a male and a female part, which are respectively provided with an axially extending outer toothing and a complementary inner toothing, whereby both parts can be axially shifted in relation to each other with their toothings, whereby this method at least consists in making the inner toothing of the female part cylindrical and in realizing the complementary grooves between the outer toothings of the male part with a tool with which a female cylindrical shape can be made, such as for example a drill or a cutter.

An advantage of such a method according to the invention is that, in order to realize the toothing on the part which is complementary to the part with the cylindrical toothing, a special toothing machine is no longer required, as a simple operation, such as for example a drilling operation or a milling operation, will suffice to realize the grooves between the toothing.

Of course, this has a positive effect on the cost price for manufacturing the coupling.

According to a preferred method of the invention, the cylindrical grooves are provided at regular distances from each other and centered on a perimeter, and the cylindrical toothing is moreover preferably semi-cylindrical or practically semi-cylindrical.

A simple method according to the invention for manufacturing such a coupling consists in providing axial bores at regular distances from each other and centered on the above-mentioned perimeter in the part concerned, and in then turning off the material of said part coaxially to the axis of the circle, up to a certain diameter.

An alternative method according to the invention consists in first turning off the part concerned coaxially to the axis up to a certain diameter and in then providing cylindrical grooves at regular distances from each other and centered on the above-mentioned perimeter by means of a milling operation according to a radial direction (R) crosswise to the axial direction.

An advantage of the above-mentioned methods is that by performing a simple drill and turning off operation or a simple turning off and milling operation, the toothing of one of the parts is obtained, which operations can be performed by standard machines and moreover do not require any highly skilled technical personnel.

According to another preferred method of the invention, the heads of at least one of the toothings are adjusted, such that the height of the toothing concerned decreases in the axial direction as of the centre of the teeth towards the far ends of the teeth, according to a curved course.

As an alternative or additionally, the width of one of the toothings can be adjusted, such that the width of the teeth decreases as of the centre of the teeth to the outside and thus has a barrel-shaped course according to the axial direction.

An advantage of these methods is that the coupling of both parts is made easier, as the curve provides enough play to put the first part in the second part according to an axial direction.

Additionally, the coupled parts must not be exactly in line thanks to said curve.

The invention also concerns a coupling which mainly consists of a male and a female part, which are respectively provided with an axially extending outer toothing and a complementary inner toothing, whereby both parts can be axially shifted in relation to each other with their toothings, characterized in that the inner toothing of the female part and the grooves between the outer toothings of the male part are cylindrical.

In order to better explain the characteristics of the invention, by way of example only without being limitative in any way, some methods for manufacturing a coupling according to the invention are described with reference to the accompanying drawings, in which:
figure 1 schematically represents a coupling obtained according to the method of the invention when not coupled, seen as a section;
figures 2, 3 and 4 are views to a larger scale according to the arrows F2, F3 and F4 in figure 1;
figure 5 represents a section of the coupling from figure 1 when coupled;
figure 6 represents a section according to line VI-VI in figure 5;
figures 7 to 9 represent different operations for manufacturing a coupling according to a preferred method according to the invention; and figures 10 to 13 illustrate alternative methods.

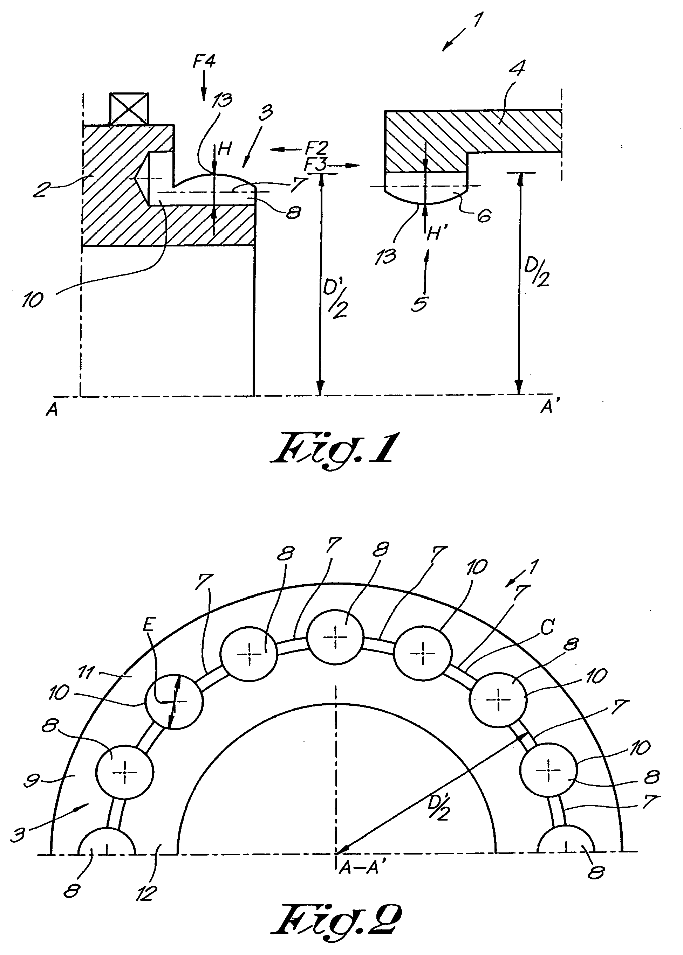

The coupling 1 represented in figures 1 to 6 consists of a male part 2 with an outer toothing 3 and a female part 4 with an inner toothing 5 working in conjunction with the latter.

This outer toothing 3 and inner toothing 5 extend in the axial direction AA'.

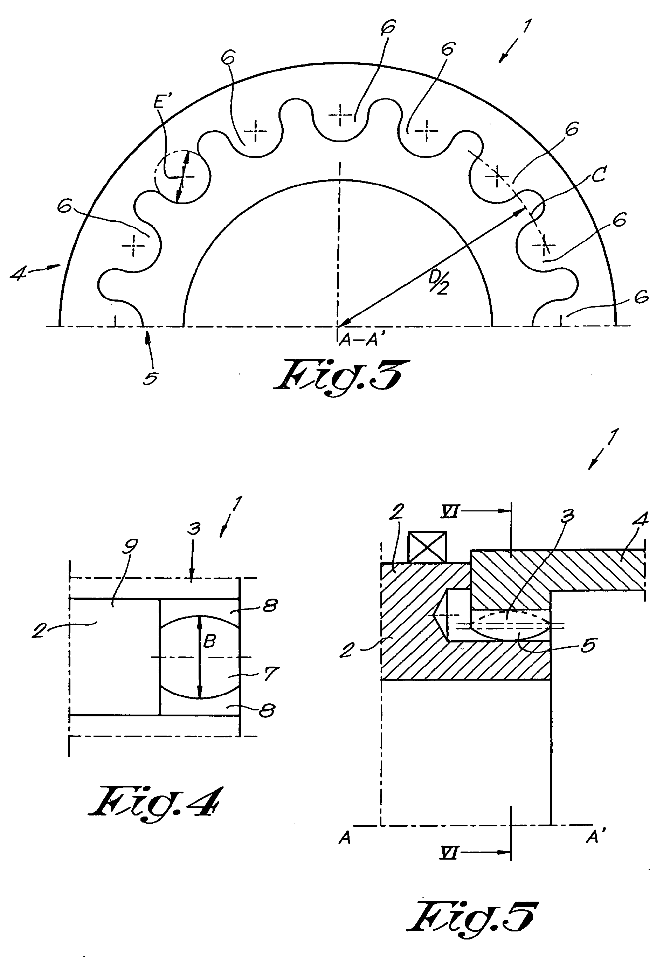

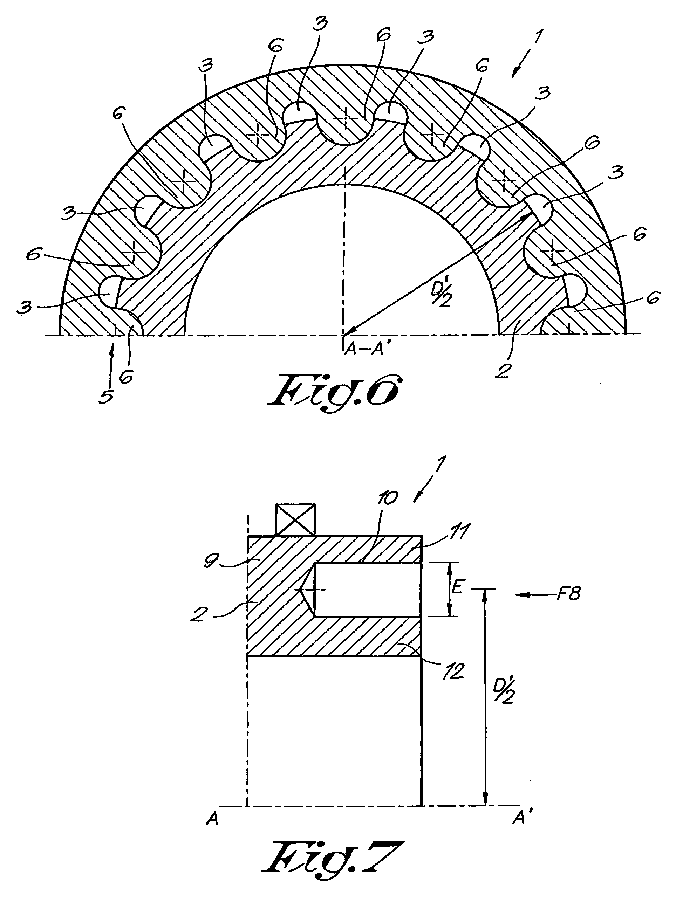

As is represented for example in greater detail in figure 3, the teeth 6 of the inner toothing 5 of the female part 4 are cylindrical.

The outer toothing 3 on the male part 2 is complementary to the inner toothing 5 of the female part 4.

This means that between two successive teeth 7 of the outer toothing 3 is each time defined a groove 8 with cylindrical walls, in which fits a cylindrical tooth 6 of the inner toothing 5 of the female part 4.

The method for manufacturing a coupling 1 according to figures 1 to 6 is as follows.

The female part 4 with the cylindrical toothing 5 can be made according to the techniques known to the craftsman.

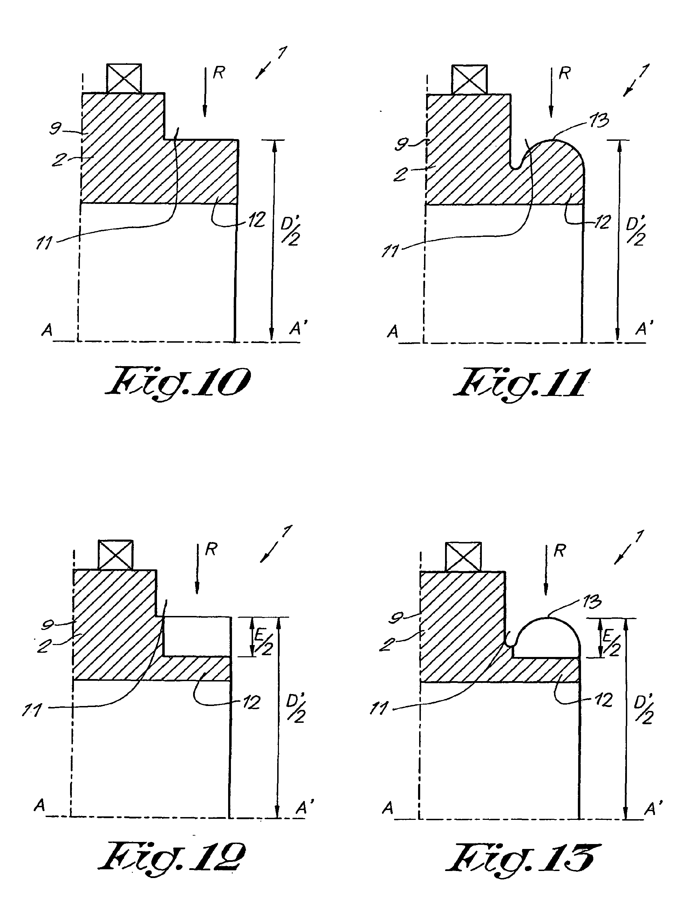

According to the invention, the male part 2 can for example be obtained following a method whose successive steps are illustrated by means of figures 7 to 9.

In a first step, which is represented in figures 7 and 8, bore holes 10 are made at regular distances over a perimeter C in the axial direction AA' and up to a certain depth in a piece of material 9 which has either or not been processed.

The above-mentioned bore holes 10 are preferably centered on the perimeter C.

In a second step, which is represented in figure 9, a part 11 of the piece 9 is then turned off coaxially to the axis AA'.

The piece 9 is preferably maximally turned off up to the above-mentioned circle C.

In this manner, as is represented in greater detail in figure 2, an outer toothing 3 is obtained in the male part 2 whereby, between two successive teeth 7 is each time situated a groove 8 with semi-cylindrical or almost semi-cylindrical walls.

Naturally, in order that the outer toothing 3 and inner toothing 5 be complementary, the cylindrical inner toothing 5 must be provided on a cylindrical surface whose inner diameter D is equal to or larger than the outer diameter D' of the turned-off part 12 of the piece 9.

Further, the diameter E of the cylindrical grooves 8 is equal to the diameter E' of the cylindrical teeth 6 of the inner toothing 5, apart from a possible play.

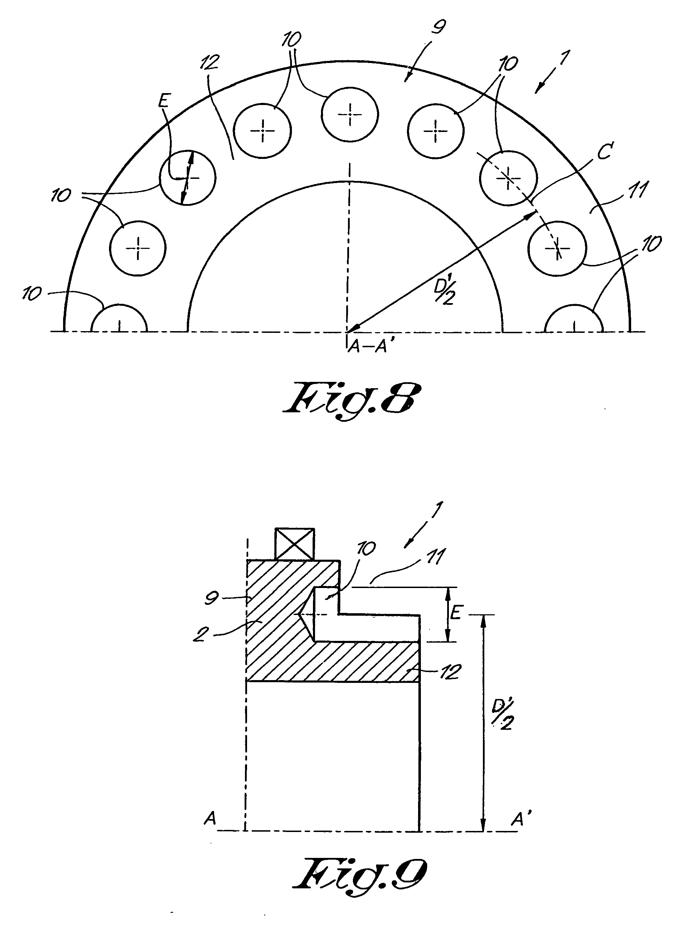

This makes it possible to put the male part 2 in the female part 4, as is represented in figures 5 and 6, with very little play or no play at all.

The outer toothing 3 and the inner toothing 5 preferably have an equal number of teeth 6 and 7.

An optional step when manufacturing a coupling 1 according to a method of the invention may consist in finishing the outer toothing 3 and/or the inner toothing 5, for example by adjusting the heads 13 of the teeth 6 and/or 7, for example by means of polishing, such that the height H, H' respectively, of the toothings 3 or 5 concerned obtains a curved course according to the axial direction AA', as is represented in figure 1.

Alternatively or additionally, also the width B of one of the toothings 3 and/or 5 can be adjusted, such that this width B has a barrel-shaped course according to the axial direction AA', which is represented for example in figure 4 for the outer toothing 3.

Thanks to this finishing it becomes possible for the male part 2 and the female part 4 to easily slide into each other, whereas alignment errors or aberrations within the manufacturing tolerances between the coupled parts 2 and 4 can be easily set off.

An alternative method according to the invention consists, in a first step which is represented in figure 10, in turning off a part 11 of an either or not processed piece of material 9 coaxially to the axis AA' up to a diameter D'.

It may also be possible to provide an above-mentioned curved profiling, during or after the turning off, as is represented for example in figure 11.

In a second step, depending on whether an either or not curved profiling is provided, which is represented in figures 12 and 13 respectively, cylindrical grooves 8 are milled at regular distances from each other and centered on a perimeter C according to the axial direction AA' by means of a milling operation in a radial direction R.

Thus is obtained an analogous result.

It is clear that with the above-described method according to the invention, a coupling of the above-mentioned type can be obtained in a simpler manner than with the techniques applied until now, and that the cost for manufacturing such couplings can thus be reduced.

Although in the given example, the inner toothing 5 is cylindrical and the outer toothing 3 is mainly obtained by means of a drilling or milling operation, followed or preceded by a turning off operation, it is not excluded to make the outer toothing 3 cylindrical and to manufacture the inner toothing 5 according to a method which is analogous to the method described above by first providing bore holes 10 in the female part 4 which are complementary to the cylindrical toothing on the male part 2 and by subsequently turning off the female part 4 or by applying the alternative method, whereby a turning off operation is first performed, followed by a milling operation.

Further, it is not excluded for the toothings 3 and 5 to be finished in other manners than the ones described above.

The invention is by no means limited to the methods given as an example and described in the figures; on the contrary, such a method according to the invention can be applied in many other ways.

## Claims

1. Method for manufacturing a coupling (1) of the type which mainly consists of a male part (2) and a female part (4), which are respectively provided with an axially extending outer toothing (3) and a complementary inner toothing (5), whereby both parts (2,4) can be axially shifted in relation to each other with their toothings (3,5), **characterized in that** it at least consists in making the toothing (5) of one of the parts (4) cylindrical and in realizing the grooves (8) between the outer toothings (3) of the male part (2) with a tool with which a female cylindrical shape (8) can be made, such as for example a drill or a cutter.

2. Method according to claim 1, **characterized in that** cylindrical grooves (8) are provided at regular distances over a perimeter (C) of the part concerned.

3. Method according to claim 2, **characterized in that** the cylindrical grooves (8) are centered on the above-mentioned perimeter (C).

4. Method according to any one of the preceding claims, **characterized in that** the cylindrical toothing (5) is semi-cylindrical or practically semi-cylindrical.

5. Method according to any one of claims 2 or 3, **characterized in that** it consists in providing axial bore holes (10) in the part concerned (2) at regular distances from each other and centered on the above-mentioned perimeter (C), and in afterwards turning off the material (11) of that part (2) coaxially to the axis (AA') of the circle (C) up to a diameter (D').

6. Method according to any one of claims 2 or 3, **characterized in that** it consists in first turning off the part concerned (2) coaxially to the axis (AA') up to a diameter (D') and in then providing axial cylindrical grooves (8) at regular distances from each other and centered on the above-mentioned perimeter (C) by means of a milling operation.

7. Method according to claims 5 or 6, **characterized in that** the material (11) is maximally turned off up to the above-mentioned circle (C).

8. Method according to any one of the preceding claims, **characterized in that** the cylindrical toothing (5) is provided on a cylindrical surface whose diameter (D) is equal to the diameter (D') of the turned-off part (12).

9. Method according to any one of the preceding claims, **characterized in that** the above-mentioned cylindrical grooves (8) are provided with a diameter (E) which is equal to the diameter (E') of the cylindrical teeth (6).

10. Method according to any one of the preceding claims, **characterized in that** the outer toothing (3) of the male part (2) is realized with just as many teeth as the inner toothing (5) of the female part (4).

11. Method according to any one of the preceding claims, **characterized in that** the heads (13) of at least one of the toothings (3,5) are adjusted, such that the height (H,H') of the toothing (3,5) concerned decreases in the axial direction (AA') as of the centre of the teeth (6,7) towards the far ends of the teeth (6,7).

12. Method according to claims 4 or 9, **characterized in that** the width (B) of one of the toothings (3,5) is adjusted, such that the width (B) of the teeth (6,7) decreases as of the centre of the teeth (6,7) towards the outside.

13. Coupling which mainly consists of a male part (2) and a female part (4), which are respectively provided with an axially extending outer toothing (3) and complementary inner toothing (5), whereby both parts (2,4) can be axially shifted in relation to each other with their toothings (3,5), **characterized in that** the inner toothing of the female part (4) and the grooves (8) between the outer toothings of the male part (2) are cylindrical.
